# EUROPEAN PATENT APPLICATION

(11) **EP 4 585 997 A1**
(43) Date of publication of application: **16.07.2025**
(21) Application number: 24200289.7
(22) Date of filing: 13.09.2024
(51) Int. Cl.: G02B 27/28, G02B 27/01

(54) **PROJECTOR WITH PANCAKE LENS ASSEMBLY**

(30) Priority: 09.01.2024 US 202418408539
(71) Applicant: Himax Technologies Limited, Tainan City 74148 (TW)
(72) Inventor: Cheng, Yu-Ching, 74148 Tainan City (TW); Lu, Yin-Dong, 74148 Tainan City (TW)
(74) Representative: Straus, Alexander

(57) **Abstract**

A projector is provided, which includes a light source for emitting incident light rays, a pancake lens assembly, and optical element assembly for forming a pattern by the incident light rays emitted from the pancake lens assembly. A pancake lens assembly includes a polarizer, a wave plate, and a lens connected to the polarizer or the wave plate. The pancake lens assembly is disposed between the light source and the optical element assembly and configured to fold light path of the incident light rays based on the polarization of the incident light rays in order to reduce the total module height of the projector. The projector may overcome the problems of the thick light collimating or lens system in the art which increases the total module height of the projector.

## Description

### Field of the Invention

The present disclosure relates to a projector, and more particularly, to a projector with a pancake lens assembly.

### Background of the Invention

In 3D sensing, to determine the depth of an object, devices projecting dot or flood patterns are usually needed. By projecting specific dot patterns or flood patterns onto the object, the depth of the object could be decoded by various mechanisms and algorithms. Depending on the application, different projected field of views are required.

To project a dot pattern with sharp and high intensity dots, a light collimating system is usually needed. Also, to project a flood pattern with specific intensity distribution, a lens system may be required.

However, one of the problems encountered in the dot or flood projector is that the total length of the light collimating or lens system may be very thick and thus increase the total module height of the dot or flood projector, respectively, depending on the required field of view.

In view of the foregoing, there is an unmet need in the art to provide a novel light collimating system of the dot projector or the lens system of the flood projector to overcome the drawbacks faced by existing prior art.

### Summary of the Invention

To solve the aforementioned problems, the present disclosure provides a projector, comprising: a light source for emitting incident light rays; a pancake lens assembly configured to fold light path of the incident light rays, comprising: a polarizer, a wave plate, a lens connected to the polarizer or the wave plate; and an optical element assembly for forming a pattern by the incident light rays emitted from the pancake lens assembly, wherein the pancake lens assembly is disposed between the light source and the optical element assembly.

In summary, the present disclosure provides a projector using a pancake lens assembly. The pancake lens assembly folds the light path based on the polarization of the incident light rays. With the folded light path, the total module height of the projector used in the present disclosure can be reduced.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a schematic diagram of a projector according to at least one embodiment of the present disclosure.
FIG. 2 is a schematic diagram of a projector according to at least one embodiment of the present disclosure.
FIG. 3A is a schematic diagram of a pancake lens assembly having a substrate for folding the light path based on linear polarization light rays according to at least one embodiment of the present disclosure.
FIG. 3B is a schematic diagram of a pancake lens assembly having a substrate for folding the light path based on linear polarization light rays according to at least one embodiment of the present disclosure.
FIG. 3C is a schematic diagram of a pancake lens assembly having a substrate for folding the light path based on circular polarization light rays according to at least one embodiment of the present disclosure.
FIG. 4A is a schematic diagram of a pancake lens assembly without having a substrate for folding the light path based on linear polarization light rays according to at least one embodiment of the present disclosure.
FIG. 4B is a schematic diagram of a pancake lens assembly without having a substrate for folding the light path based on linear polarization light rays according to at least one embodiment of the present disclosure.
FIG. 4C is a schematic diagram of a pancake lens assembly without having a substrate for folding the light path based on circular polarization light rays according to at least one embodiment of the present disclosure.
FIG. 5A is a schematic diagram of a projector with a pancake lens assembly as a first element of a two-set lens assembly in a direction from the light source to the optical element assembly according to at least one embodiment of the present disclosure.
FIG. 5B is a schematic diagram of a projector with a pancake lens assembly as a second element of a two-set lens assembly in a direction from the light source to the optical element assembly according to at least one embodiment of the present disclosure.
FIG. 6A is a schematic diagram of two sets of pancake lens assembly for folding the light path based on linear polarization light rays according to at least one embodiment of the present disclosure.
FIG. 6B is a schematic diagram of two sets of pancake lens assembly for folding the light path based on linear polarization light rays according to at least one embodiment of the present disclosure.
FIG. 6C is a schematic diagram of two sets of pancake lens assembly for folding the light path based on circular polarization light rays according to at least one embodiment of the present disclosure.

### Detailed Description

The following descriptions of the embodiments illustrate implementations of the present disclosure, and those skilled in the art of the present disclosure can readily understand the advantages and effects of the present disclosure in accordance with the contents herein. However, the embodiments of the present disclosure are not intended to limit the scope of the present disclosure. The present disclosure can be practiced or applied by other alternative embodiments, and every detail included in the present disclosure can be changed or modified in accordance with different aspects and applications without departing from the essentiality of the present disclosure.

The features such as a ratio, structure, and dimension shown in drawings accompanied with the present disclosure are simply used to cooperate with the contents disclosed herein for those skilled in the art to read and understand the present disclosure, rather than to limit the scope of implementation of the present disclosure. Thus, in the case that does not affect the purpose of the present disclosure and the effect brought by the present disclosure, any change in proportional relationships, structural modification, or dimensional adjustment should fall within the scope of the technical contents disclosed herein.

As used herein, "comprising" (and any variant or conjugation thereof, such as "comprise" or "comprises"), "including" (and any variant or conjugation thereof, such as "include" or "includes"), or "having" (and any variant or conjugation thereof, such as "have" or "has") a specific element, unless otherwise specified, may include other elements such as components, structures, regions, portions, devices, systems, or connection relationships rather than exclude those elements.

The terms "on," "before," "after," "side," "front," and "between" described herein are simply used to clarify the embodiments of the present disclosure, rather than used to limit the scope of implementation of the present disclosure. Adjustments, interchanges, and alteration of relative positions and relationships thereof should be considered within the scope of implementation of the present disclosure if the technical contents of the present disclosure are not substantially changed.

The terms "first," "second," "third," "fourth," etc., used herein are simply used to describe or distinguish elements such as components, structures, regions, portions, devices, or systems, rather than used to limit the scope of implementation of the present disclosure or to limit the spatial order of the elements. In addition, unless otherwise specified, the singular forms "a/an" and "the" used herein also include plural forms, and the terms "or" and "and/or" used herein are interchangeable.

The numeral ranges used herein are inclusive and combinable, and any numeral value that falls within the numeral scope herein can be taken as a maximum or minimum value to derive the sub-ranges therefrom. For example, it should be understood that the numeral range from "0.500mm to 5.000mm" comprises any sub-ranges between the minimum value of 0.500mm and the maximum value of 5.000mm, such as the sub-ranges from 0.500mm to 2.000mm, from 2.000mm to 3.500mm, and from 3.500mm to 5.000mm. Furthermore, any multiple numeral points used herein can be chosen as a maximum or minimum value to derive the numeral ranges therefrom. For example, 0.771mm, 2.895mm, and 4.832mm can derive the numeral ranges of 0.500mm to 2.000mm, 2.000mm to 3.500mm, or 3.500mm to 5.000mm.

The terms "connected," "connecting," "disposed," "disposing," "coated," "coating," "stacked," "stacking," "formed," "forming," "placed," and "placing" used herein are used to describe a plurality of elements connected together directly or indirectly. "Direct connection" is used to describe a plurality of elements connected together upon direct contact; and "indirect connection" is used to describe a plurality of elements connected together via at least one connecting component. For example, The terms "connected," "connecting," "disposed," "disposing," "coated," "coating," "stacked," "stacking," "formed" and "forming" used herein may be accomplished by conjugation, binding, bonding, adhesion, insertion, clamping, attachment, embedding, integrated molding, gluing, gumming, cementing or any combination thereof. In at least one of the embodiments of the present disclosure, the plurality of elements is "detachable" connected, that is, the plurality of elements may be detached and separated after being connected.

The term "incident light rays" used herein may be, but not limited to, linear polarization light rays, circular polarization light rays, or non-polarized light rays. If the incident light rays are the non-polarized light rays, a linear or circular polarizer may be disposed, coated or placed between the non-polarized light rays and the first lens; or between the non-polarized light rays and the side A of the first lens.

The term "projector" used herein may be, but not limited to, a dot projector or a flood projector.

In at least one embodiment, the projector used herein may be used in, but not limited to, a television, a laptop, a desktop, a mobile phone, a tablet, a digital camera, a car navigation, a virtual reality (VR) device, a consumer electronics device, a monitor, a webcam, a car, security, a medical device, a home appliance, internet of thing (IOT).

The term "lens" used herein may be a convex, a concave, or a flat lens, but the present disclosure is not limited thereto. In some embodiments, the lens may be, but not limited to, a collimating lens with an effective focal length (EFL) of 2.5mm or 5mm.

The term "reflective linear polarizer" used herein is used to transmit one orientation of linearly polarization light ray, while reflecting the other orthogonal linear orientation. In some embodiments the reflective linear polarizer may be, but not limited to, a wire grid polarizer.

The term "reflective circular polarizer" used herein is used to transmit one handedness of circularly polarization light ray, while reflecting the other and changing the handedness of the reflected light ray.

The term "optical element assembly" used herein may be, but not limited to, a diffractive optical element (DOE), a micro-lens array (MLA), a metasurface element, and a prism array.

The term "pattern" used herein may be, but not limited to, a projected dot pattern or a projected flood pattern.

In at least one embodiment of the present disclosure, the pancake lens assembly further comprises a substrate. In at least one embodiment of the present disclosure, the pancake lens assembly does not comprise a substrate. In some embodiments of the present disclosure, the substrate comprises a glass.

In at least one embodiment of the present disclosure, the light source is a laser. In some embodiments of the present disclosure, the laser is a vertical cavity surface emitting laser (VCSEL), a VCSEL array or an edge emitting laser (EEL).

In at least one embodiment of the present disclosure, the incident light rays are linear polarization light rays, circular polarization light rays, or non-polarized light ray. In some embodiments of the present disclosure, the projector further comprises the linear polarizer or the circular polarizer, wherein the linear polarizer or the circular polarizer is disposed between the light source and the pancake lens assembly, provided that the incident light rays are the non-polarized light rays. In some embodiments of the present disclosure, the pancake lens assembly further comprises a beam splitter (BS). In some embodiments of the present disclosure, the beam splitter is disposed after the wave plate in a direction from the light source to the optical element assembly, provided that the incident light rays are the linear polarization light rays. In some embodiments of the present disclosure, the beam splitter is disposed before the wave plate in a direction from the light source to the optical element assembly, provided that the incident light rays are the circular polarization light rays. In some embodiments of the present disclosure, the polarizer is selected from the group consisting of a reflective linear polarizer, a reflective circular polarizer, a circular polarizer, a linear polarizer, and any combination thereof. In some embodiments of the present disclosure, the reflective linear polarizer, the wave plate, and the reflective circular polarizer are disposed in order along a direction from the light source to the optical element assembly, provided that the incident light rays are the linear polarization light rays. In some embodiments of the present disclosure, the reflective linear polarizer, the wave plate, the beam splitter, and the circular polarizer are disposed in order along a direction from the light source to the optical element assembly, provided that the incident light rays are the linear polarization light rays. In some embodiments of the present disclosure, the beam splitter, the wave plate, and the reflective linear polarizer are disposed in order along a direction from the light source to the optical element assembly, provided that the incident light rays are the circular polarization light rays.

In at least one embodiment of the present disclosure, the wave plate is a quarter-wave plate.

In at least one embodiment of the present disclosure, the lens is a convex lens, a concave lens, a flat lens, or any combination thereof.

In at least one embodiment of the present disclosure, the pancake lens assembly comprises a first lens. In some embodiments of the present disclosure, the wave plate is disposed close to the first lens in a direction from the light source to the optical element assembly. In some embodiments of the present disclosure, the pancake lens assembly further comprises a second lens. In some embodiments of the present disclosure, the wave plate is disposed before the first lens in a direction from the light source to the optical element assembly, between the first lens and the second lens, or after the second lens in a direction from the light source to the optical element assembly. In some embodiments of the present disclosure, the pancake lens assembly further comprises a third lens and a fourth lens. In some embodiments of the present disclosure, the wave plate is disposed before the third lens in a direction from the light source to the optical element assembly, between the third lens and the fourth lens, or after the fourth lens in a direction from the light source to the optical element assembly. In some embodiments of the present disclosure, further comprising a substrate is disposed between the first lens and the second lens and/or between the third lens and the fourth lens.

In at least one embodiment of the present disclosure, the optical element assembly is selected from the group consisting of a diffractive optical element, a micro-lens array, a metasurface element, and a prism array.

In at least one embodiment of the present disclosure, the pattern is a dot pattern or a flood pattern.

In some embodiments of the present disclosure, the thickness of the substrate (for example, the glass substrate) can range from 0.10mm to 1.10mm, 0.10mm to 0.90mm, 0.10mm to 0.70mm, 0.10mm to 0.50mm, 0.10mm to 0.30mm, 0.30mm to 1.10mm, 0.30mm to 0.90mm, 0.30mm to 0.70mm, 0.30mm to 0.50mm, 0.50mm to 1.10mm, 0.50mm to 0.90mm, 0.50mm to 0.70mm, 0.70mm to 1.10mm, 0.70mm to 0.90mm, and/or 0.90mm to 1.10mm, but the present disclosure is not limited thereto.

In some embodiments of the present disclosure, the object height of the light source (for example, laser) can range from 0.10mm to 0.75mm, 0.10mm to 0.60mm, 0.10mm to 0.20mm, 0.20mm to 0.75mm, 0.20mm to 0.60mm, and/or 0.60mm to 0.75mm, but the present disclosure is not limited thereto.

In some embodiments of the present disclosure, total track length (TTL) of the projector having two lens surfaces of the present disclosure (that is, the distance between the light source and the second lens apex/ B of the first lens apex) can range from 0.5mm to 2.0mm, 0.5mm to 3.5mm, 0.5mm to 5.0mm, 2.0mm to 5.0mm, 2.0mm to 3.5mm, 3.5mm to 5.0mm, but the present disclosure is not limited thereto.

In some embodiments of the present disclosure, total track length (TTL) of the projector having four lens surfaces of the present disclosure (that is, the distance between the light source and the fourth lens apex) can range from 2.0mm to 5.0mm, 2.0mm to 4.0mm, 2.0mm to 3.0mm, 3.0mm to 5.0mm, 3.0mm to 4.0mm, and 4.0mm to 5.0mm, but the present disclosure is not limited thereto.

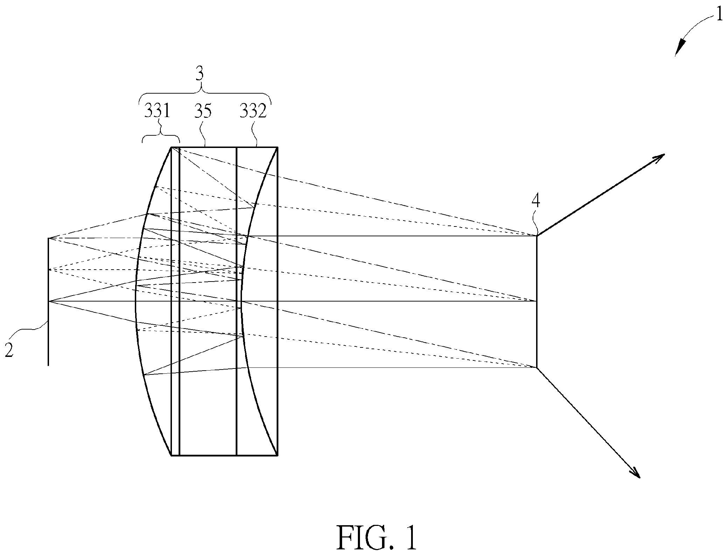

FIG. 1 shows a projector 1 according to at least one embodiment of the present disclosure, including a light source 2; a pancake lens assembly 3, comprising a first lens 331, a substrate 35, and a second lens 332; and an optical element assembly 4. It should be noted that the quantity and connection of each of the parts are exemplary and can be increased, decreased, or altered according to actual needs. As shown in FIG. 1, the light source 2 is used for emitting a linear polarization light ray, a circular polarization light ray or a non-polarized light ray; the pancake lens assembly 3 is used for folding the light path based on the polarization of the light ray; and the optical element assembly 4 is used for splitting the light ray or shaping the light ray into desired intensity distribution in order to form a pattern.

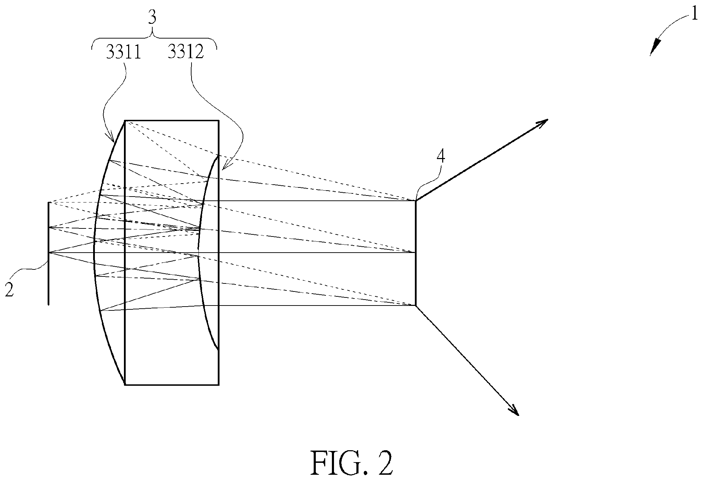

FIG. 2 shows a projector 1 according to at least one embodiment of the present disclosure, including a light source 2; a pancake lens assembly 3, comprising a first lens having a side A 3311 and a side B 3312; and an optical element assembly 4. It should be noted that the quantity and connection of each of the parts are exemplary and can be increased, decreased, or altered according to actual needs. As shown in FIG. 2, the light source 2 is used for emitting a linear polarization light ray, a circular polarization light ray or a non-polarized light ray; the pancake lens assembly 3 is used for folding the light path based on the polarization of the light ray; and the optical element assembly 4 is used for splitting the light ray or shaping the light ray into desired intensity distribution in order to form a pattern.

### Example 1: A pancake lens assembly having two lens surfaces with a substrate

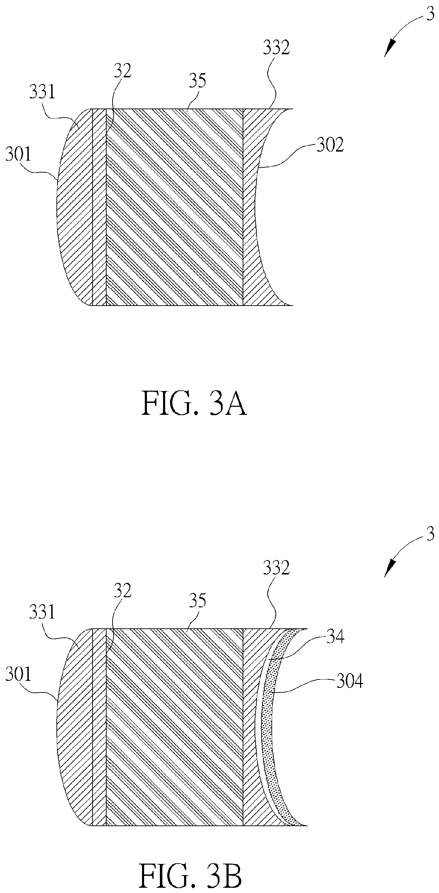

FIG. 3A shows a pancake lens assembly 3 according to at least one embodiment of the present disclosure, including a reflective linear polarizer 301, a first lens 331, a wave plate 32, a substrate 35, a second lens 332, and a reflective circular polarizer 302. As shown in FIG. 3A, the pancake lens assembly 3 is used for folding the light path based on the linear polarization of the light ray. Specifically, the reflective linear polarizer 301 and the reflective circular polarizer 302 are formed, coated or disposed on the first lens 331 and the second lens 332, respectively; and the wave plate 32 is formed, coated or disposed on the surface of the substrate 35 at the first lens 331 side. It should be noted that the quantity and connection of each of the parts are exemplary and can be increased, decreased, or altered according to actual needs. Therefore, the position of the wave plate 32 may be changed (figure not shown), for example, (1) the wave plate 32 may be formed, coated or disposed on the surface of the substrate 35 at the second lens 332 side; (2) the reflective linear polarizer 301 and the wave plate 32 are formed, coated or disposed on the surface of the first lens 331 being stacked as two layers and are conformed with the first lens 331 profile; or (3) the reflective circular polarizer 302 and the wave plate 32 are formed, coated or disposed on the surface of the second lens 332 being stacked as two layers and are conformed with the second lens 332 profile. The reflective linear polarizer 301, the wave plate 32, and the reflective circular polarizer 302 are disposed in order along in a direction from the light source 2 to the optical element assembly 4 according to FIG. 3A.

In at least one embodiment of the present disclosure, a pancake lens assembly 3 includes a reflective linear polarizer 301, a first lens 331, a wave plate 32, a substrate 35, a reflective circular polarizer 302, and a second lens 332 (figure not shown). The pancake lens assembly 3 is used for folding the light path based on the linear polarization of the light ray. Specifically, the reflective linear polarizer 301 is formed, coated or disposed on the surface of the first lens 331 and is conformed with the first lens 331 profile; the wave plate 32 is formed, coated or disposed on the substrate 35 at the first lens 331 side; and the reflective circular polarizer 302 is formed, coated or disposed on the substrate 35 at the second lens 332 side. It should be noted that the quantity and connection of each of the parts are exemplary and can be increased, decreased, or altered according to actual needs. Therefore, the position of the wave plate 32 may be changed (figure not shown), for example, (1) the reflective linear polarizer 301 and the wave plate 32 may be formed, coated or disposed on the surface of the first lens 331 being stacked as two layers and are conformed with the first lens 331 profile; or (2) the wave plate 32 and the reflective circular polarizer 302 may be formed, coated or disposed on the surface of the substrate 35 at the second lens 332 side. The reflective linear polarizer 301, the wave plate 32, and the reflective circular polarizer 302 are disposed in order along in a direction from the light source 2 to the optical element assembly 4 according to at least one embodiment of the present disclosure.

FIG. 3B shows a pancake lens assembly 3 according to at least one embodiment of the present disclosure, including a reflective linear polarizer 301, a first lens 331, a wave plate 32, a substrate 35, a second lens 332, a beam splitter 34, and a circular polarizer 304. As shown in FIG. 3B, the pancake lens assembly 3 is used for folding the light path based on the linear polarization of the light ray. Specifically, the reflective linear polarizer 301 is formed, coated or disposed on the surface of the first lens 331 and conformed with the first lens 331 profile; the wave plate 32 is formed, coated or disposed on the surface of the substrate 35 at the first lens 331 side; and the beam splitter 34 and the circular polarizer 304 are formed, coated or disposed on the surface of the second lens 332 being stacked as two layers and conformed with the second lens 332 profile.

It should be noted that the quantity and connection of each of the parts are exemplary and can be increased, decreased, or altered according to actual needs. Therefore, the position of the wave plate 32 may be changed (figure not shown), for example, (1) the reflective linear polarizer 301 and the wave plate 32 are formed, coated or disposed on the surface of the first lens 331 being stacked as two layers and are conformed with the first lens 331 profile; (2) the wave plate 32, the beam splitter 34 and the circular polarizer 304 are formed, coated or disposed on the surface of the second lens 332 being stacked as three layers and are conformed with the second lens 332 profile; or (3) the wave plate 32 is formed, coated or disposed on the surface of the substrate 35 at the second lens 332 side. The reflective linear polarizer 301, the wave plate 32, the beam splitter 34, and the circular polarizer 304 are disposed in order along in a direction from the light source 2 to the optical element assembly 4 according to FIG. 3B.

In at least one embodiment of the present disclosure, a pancake lens assembly 3 includes a reflective linear polarizer 301, a first lens 331, a wave plate 32, a substrate 35, a beam splitter 34, a second lens 332, and a circular polarizer 304 (figure not shown). The pancake lens assembly 3 is used for folding the light path based on the linear polarization of the light ray. Specifically, the reflective linear polarizer 301 is formed, coated or disposed on the surface of the first lens 331 and conformed with the first lens 331 profile; the wave plate 32 is formed, coated or disposed on the surface of the substrate 35 at the first lens 331 side; the beam splitter 34 is formed, coated or disposed on the surface of the substrate 35 at the second lens 332 side; and the circular polarizer 304 is formed, coated or disposed on the surface of the second lens 332 and conformed with the second lens 332 profile. It should be noted that the quantity and connection of each of the parts are exemplary and can be increased, decreased, or altered according to actual needs. Therefore, the position of the wave plate 32 may be changed (figure not shown), for example, (1) the reflective linear polarizer 301 and the wave plate 32 are formed, coated or disposed on the surface of the first lens 331 being stacked as two layers and are conformed with the first lens 331 profile; or (2) the wave plate 32 is formed, coated or disposed on the surface of the substrate 35 at the second lens 332 side. The reflective linear polarizer 301, the wave plate 32, the beam splitter 34, and the circular polarizer 304 are disposed in order along in a direction from the light source 2 to the optical element assembly 4 according to at least one embodiment of the present disclosure.

In at least one embodiment of the present disclosure, a pancake lens assembly 3 includes a reflective linear polarizer 301, a first lens 331, a wave plate 32, a substrate 35, a beam splitter 34, a circular polarizer 304, and a second lens 332 (figure not shown). The pancake lens assembly 3 is used for folding the light path based on the linear polarization of the light ray. Specifically, the reflective linear polarizer 301 is formed, coated or disposed on the surface of the first lens 331 and conformed with the first lens 331 profile; the wave plate 32 is formed, coated or disposed on the surface of the substrate 35 at the first lens 331 side; and the beam splitter 34 and the circular polarizer 304 are formed, coated or disposed on the surface of the substrate 35 being stacked as two layers at the second lens 332 side. It should be noted that the quantity and connection of each of the parts are exemplary and can be increased, decreased, or altered according to actual needs. Therefore, the position of the wave plate 32 may be changed (figure not shown), for example, (1) the reflective linear polarizer 301 and the wave plate 32 are formed, coated or disposed on the surface of the first lens 331 being stacked as two layers and are conformed with the first lens 331 profile; or (2) the wave plate 32 is formed, coated or disposed on the surface of the substrate 35 at the second lens 332 profile. The reflective linear polarizer 301, the wave plate 32, the beam splitter 34, and the circular polarizer 304 are disposed in order along in a direction from the light source 2 to the optical element assembly 4 according to at least one embodiment of the present disclosure.

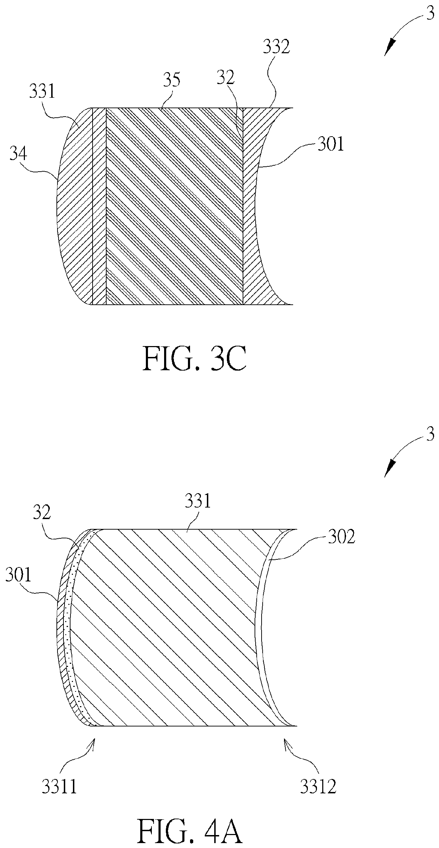

FIG. 3C shows a pancake lens assembly 3 according to at least one embodiment of the present disclosure, including a beam splitter 34, a first lens 331, a substrate 35, a wave plate 32, a second lens 332 and a reflective linear polarizer 301. As shown in FIG. 3C, the pancake lens assembly 3 is used for folding the light path based on the circular polarization of the light ray. Specifically, the beam splitter 34 is formed, coated or disposed on the surface of the first lens 331 and conformed with the first lens 331 profile; the reflective linear polarizer 301 is formed, coated or disposed on the surface of the second lens 332 and conformed with the second lens 332 profile; and the wave plate 32 is formed, coated or disposed on the surface of the substrate 35 at the second lens 332 side. It should be noted that the quantity and connection of each of the parts are exemplary and can be increased, decreased, or altered according to actual needs. Therefore, the position of the wave plate 32 may be changed (figure not shown), for example, (1) the wave plate 32 and the reflective linear polarizer 301 are formed, coated or disposed on the surface of the second lens 332 being stacked as two layers and are conformed with the second lens 332 profile; (2) the wave plate 32 is formed, coated or disposed on the surface of the substrate 35 at the first lens 331 side; or (3)
the beam splitter 34 and the wave plate 32 are formed, coated or disposed on the surface of the first lens 331 being stacked as two layers and are conformed with the first lens 331 profile. The beam splitter 34, the wave plate 32, the reflective linear polarizer 301 are disposed in order along in a direction from the light source 2 to the optical element assembly 4 according to FIG. 3C.

In at least one embodiment of the present disclosure, a pancake lens assembly 3 includes a beam splitter 34, a first lens 331, a substrate 35, a wave plate 32, a reflective linear polarizer 301, and a second lens 332 (figure not shown). The pancake lens assembly 3 is used for folding the light path based on the circular polarization of the light ray. Specifically, the beam splitter 34 is formed, coated or disposed on the surface of the first lens 331 and is conformed with the first lens 331 profile; and the wave plate 32 and the reflective linear polarizer 301 are formed, coated or disposed on the surface of the substrate 35 being stacked as two layers at the second lens 332 side. It should be noted that the quantity and connection of each of the parts are exemplary and can be increased, decreased, or altered according to actual needs. Therefore, the position of the wave plate 32 may be changed (figure not shown), for example, (1) the wave plate 32 is formed, coated or disposed on the surface of the substrate 35 at the first lens 331; and (2) the beam splitter 34 and the wave plate 32 are formed, coated or disposed on the surface of the first lens 331 being stacked as two layers and are conformed with the first lens 331 profile. The beam splitter 34, the wave plate 32, and the reflective linear polarizer 301 are disposed in order along in a direction from the light source 2 to the optical element assembly 4 according to at least one embodiment of the present disclosure.

### Example 2: A pancake lens assembly having two lens surfaces without a substrate

FIG. 4A shows a pancake lens assembly 3 according to at least one embodiment of the present disclosure, including a reflective linear polarizer 301, a wave plate 32, a first lens 331 having a side A 3311 and a side B 3312, and a reflective circular polarizer 302. As shown in FIG. 4A, the pancake lens assembly 3 is used for folding the light path based on the linear polarization of the light ray. Specifically, the reflective linear polarizer 301 and the wave plate 32 are formed, coated or disposed on the surface of the first lens 331 at the side A 3311 being stacked as two layers and are conformed with the first lens 331 profile; and the reflective circular polarizer 302 is formed, coated or disposed on the surface of the first lens 331 at the side B 3312 and is conformed with the first lens 331 profile. It should be noted that the quantity and connection of each of the parts are exemplary and can be increased, decreased, or altered according to actual needs. Therefore, the position of the wave plate 32 may be changed (figure not shown), for example, the wave plate 32 and the reflective circular polarizer 302 are formed, coated or disposed on the surface of the first lens 331 at the side B being stacked as two layers and are conformed with the first lens 331 profile. The reflective linear polarizer 301, the wave plate 32, and the reflective circular polarizer 302 are disposed in order along in a direction from the light source 2 to the optical element assembly 4 according to FIG. 4A.

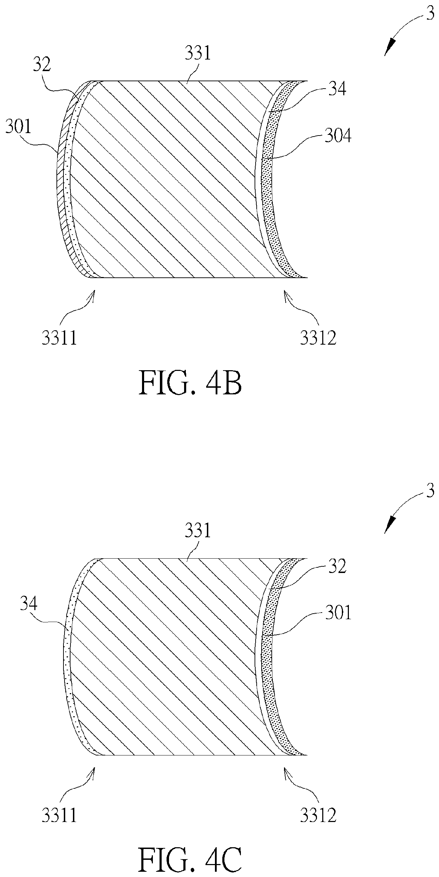

FIG. 4B shows a pancake lens assembly 3 according to at least one embodiment of the present disclosure, including a reflective linear polarizer 301, a wave plate 32, a first lens 331 having a side A 3311 and a side B 3312, a beam splitter 34, and a circular polarizer 304. As shown in FIG. 4B, the pancake lens assembly 3 is used for folding the light path based on the linear polarization of the light ray. Specifically, the reflective linear polarizer 301 and the wave plate 32 are formed, coated or disposed on the surface of the first lens 331 at the side A 3311 being stacked as two layers and are conformed with the first lens 331 profile; and the beam splitter 34 and the circular polarizer 304 are formed, coated or disposed on the surface of the first lens 331 at the side B 3312 being stacked as two layers and are conformed with the first lens 331 profile. It should be noted that the quantity and connection of each of the parts are exemplary and can be increased, decreased, or altered according to actual needs. Therefore, the position of the wave plate 32 may be changed (figure not shown), for example, the wave plate 32, the beam splitter 34 and the circular polarizer 304 are formed, coated or disposed on the surface of the first lens 331 at the side B 3312 being stacked as three layers and are conformed with the first lens 331 profile. The reflective linear polarizer 301, the wave plate 32, the beam splitter 34, and the circular polarizer 304 are disposed in order along in a direction from the light source 2 to the optical element assembly 4 according to FIG. 4B.

FIG. 4C shows a pancake lens assembly 3 according to at least one embodiment of the present disclosure, including a beam splitter 34, a first lens 331 having a side A 3311 and a side B 3312, a wave plate 32, and a reflective linear polarizer 301. As shown in FIG. 4C, the pancake lens assembly 3 is used for folding the light path based on the circular polarization of the light ray. Specifically, the beam splitter 34 is formed, coated or disposed on the surface of the first lens 331 at the side A 3311 and is conformed with the first lens 331 profile; and the reflective linear polarizer 301 and the wave plate 32 are formed, coated or disposed on the surface of the first lens 331 at the side B 3312 being stacked as two layers and are conformed with the first lens 331 profile. It should be noted that the quantity and connection of each of the parts are exemplary and can be increased, decreased, or altered according to actual needs. Therefore, the position of the wave plate 32 may be changed (figure not shown), for example, the beam splitter 34 and the wave plate 32 are formed, coated or disposed on the surface of the first lens 331 at the side A 3311 being stacked as two layers and conformed with the first lens 331 profile. The beam splitter 34, the wave plate 32, and the reflective linear polarizer 301 are disposed in order along in a direction from the light source 2 to the optical element assembly 4 according to FIG. 4C.

### Example 3: Two sets of lens assembly having four lens surfaces with a pancake lens assembly and a non-pancake lens assembly

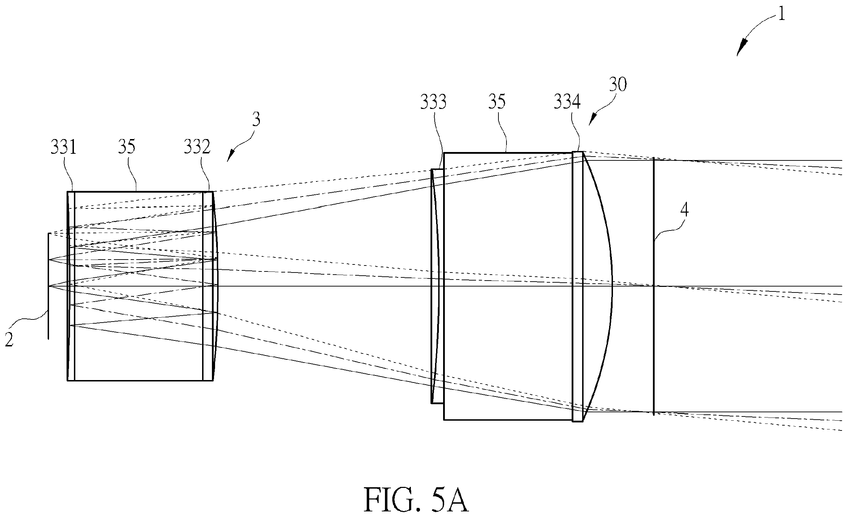

FIG. 5A shows a projector 1 according to at least one embodiment of the present disclosure, including a light source 2; a pancake lens assembly 3 having a first lens 331, a substrate 35, and a second lens 332; and a non-pancake lens assembly 30 having a third lens 333, a substrate 35, and a fourth lens 334, wherein the pancake lens assembly 3 is a first element and the non-pancake lens assembly 30 is a second element of the two-set lens assembly in a direction from the light source 2 to the optical element assembly 4. As shown in FIG. 5A, the pancake lens assembly 3 is used for folding the light path based on the linear or circular polarization of the light ray. It should be noted that the quantity and connection of each of the parts are exemplary and can be increased, decreased, or altered according to actual needs. Therefore, the pancake lens assembly 3 and the non-pancake lens assembly 30 may be without the substrate 35 (figure not shown); and the pancake lens assembly 3 may further comprise a reflective linear polarizer 301, a wave plate 32, a reflective circular polarizer 302, a beam splitter 34, and/or a circular polarizer 304 (figure not shown). The arrangement of the reflective linear polarizer 301, the wave plate 32, the reflective circular polarizer 302, the beam splitter 34, and/or the circular polarizer 304 may be positioned as described in Example 1 and 2 (figure not shown).

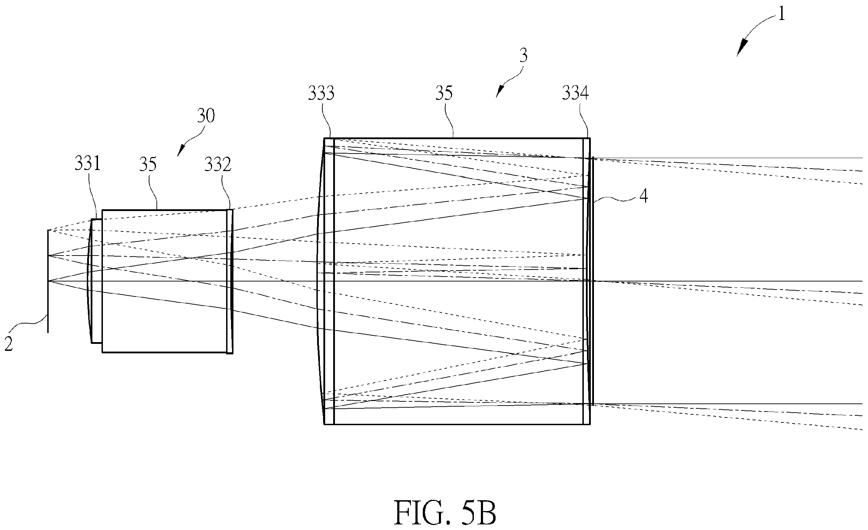

FIG. 5B shows a projector 1 according to at least one embodiment of the present disclosure, including a light source 2; a non-pancake lens assembly 30 having a first lens 331, a substrate 35, and a second lens 332; and a pancake lens assembly 30 having a third lens 333, a substrate 35, and a fourth lens 334, wherein the pancake lens assembly 3 is a second element and the non-pancake lens assembly 30 is a first element of the two-set lens assembly in a direction from the light source 2 to the optical element assembly 4. As shown in FIG. 5B, the pancake lens assembly 3 is used for folding the light path based on the linear or circular polarization of the light ray. It should be noted that the quantity and connection of each of the parts are exemplary and can be increased, decreased, or altered according to actual needs. Therefore, the pancake lens assembly 3 and the non-pancake lens assembly 30 may be without the substrate 35 (figure not shown); and the pancake lens assembly 3 may further comprise a reflective linear polarizer 301, a wave plate 32, a reflective circular polarizer 302, a beam splitter 34, and/or a circular polarizer 304 (figure not shown). The arrangement of the reflective linear polarizer 301, the wave plate 32, the reflective circular polarizer 302, the beam splitter 34, and/or the circular polarizer 304 may be positioned as described in Example 1 and 2 (figure not shown).

### Example 4: Two sets of pancake lens assembly having four lens surfaces

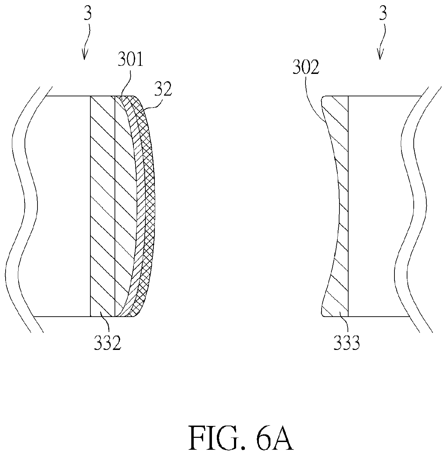

FIG. 6A shows two sets of pancake lens assembly 3 according to at least one embodiment of the present disclosure, including a first lens 331 (figure not shown), a substrate 35, a second lens 332, a reflective linear polarizer 301, a wave plate 32, a reflective circular polarizer 302, a third lens 333 and a fourth lens 334 (figure not shown). As shown in FIG. 6A, the folded light path may be, but not limited to, between the second lens 332 and the third lens 333 via the two sets of pancake lens assembly 3 based on the linear polarization of the light ray. Specifically, the reflective linear polarizer 301 and the wave plate 32 are formed, coated or disposed on the surface of the second lens 332 being stacked as two layers and conformed with the second lens 332 profile; and the reflective circular polarizer 302 is formed, coated or disposed on the surface of the third lens 333 and conformed with the third lens 333 profile. It should be noted that the quantity and connection of each of the parts are exemplary and can be increased, decreased, or altered according to actual needs. Therefore, the two sets of the pancake lens assembly 3 may be without the substrate 35 (figure not shown); and the position of the wave plate 32 may be changed (figure not shown), for example, the wave plate 32 and the reflective circular polarizer 302 are formed, coated or disposed on the surface of the third lens 333 being stacked as two layers and conformed with the third lens 333 profile. The reflective linear polarizer 301, the wave plate 32, and the reflective circular polarizer 302 are disposed in order along in a direction from the light source 2 to the optical element assembly 4 according to FIG. 6A.

In at least one embodiment of the present disclosure (figure not shown), two sets of pancake lens assembly 3 includes a first lens 331, two substrates 35, a second lens 332, a reflective linear polarizer 301, a wave plate 32, a third lens 333, a reflective circular polarizer 302 and a fourth lens 334. The folded light path may be, but not limited to, between the second lens 332 and the third lens 333 via the two sets of pancake lens assembly 3 based on the linear polarization of the light ray. Specifically, the reflective linear polarizer 301 and the wave plate 32 are formed, coated or disposed on the surface of the second lens 332 being stacked as two layers and are conformed with the second lens 332 profile; and the reflective circular polarizer 302 is formed, coated or disposed on the surface of the substrate 35 at the third lens 333 side. It should be noted that the quantity and connection of each of the parts are exemplary and can be increased, decreased, or altered according to actual needs. Therefore, the two sets of the pancake lens assembly 3 may be without the substrate 35 (figure not shown); and the position of the wave plate 32 may be changed (figure not shown), for example, the wave plate 32 is formed, coated or disposed on the surface of the third lens 333 and is conformed with the third lens 333 profile; or the wave plate 32 and the reflective circular polarizer 302 are formed, coated or disposed on the surface of the substrate 35 being stacked as two layers at the third lens 333 side. The reflective linear polarizer 301, the wave plate 32, and the reflective circular polarizer 302 are disposed in order along in a direction from the light source 2 to the optical element assembly 4 according to at least one embodiment of the present disclosure.

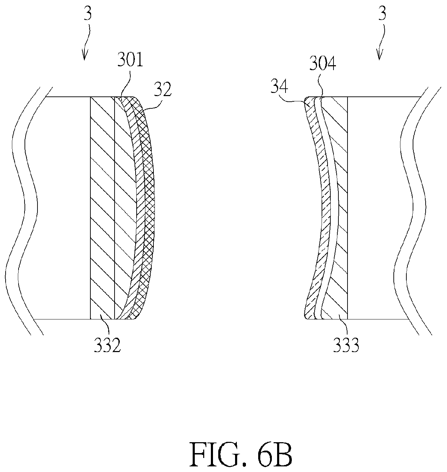

FIG. 6B shows two sets of pancake lens assembly 3 according to at least one embodiment of the present disclosure, including a first lens 331 (figure not shown), two substrates 35 (figure not shown), a second lens 332, a reflective linear polarizer 301, a wave plate 32, a beam splitter 34, a circular polarizer 304, a third lens 333 and a fourth lens 334 (figure not shown). As shown in FIG. 6B, the folded light path may be, but not limited to, between the second lens 332 and the third lens 333 via the two sets of pancake lens assembly 3 based on the linear polarization of the light ray. Specifically, the reflective linear polarizer 301 and the wave plate 32 are formed, coated or disposed on the surface of the second lens 332 being stacked as two layers and are conformed with the second lens 332 profile; and the beam splitter 34 and the circular polarizer 304 are formed, coated or disposed on the surface of the third lens 333 being stacked as two layers and are conformed with the third lens 333 profile. It should be noted that the quantity and connection of each of the parts are exemplary and can be increased, decreased, or altered according to actual needs. Therefore, the two sets of the pancake lens assembly 3 may be without the substrate 35 (figure not shown); and the position of the wave plate 32 may be changed (figure not shown), for example, the wave plate 32, the beam splitter 34 and the circular polarizer 304 are formed, coated or disposed on the surface of the third lens 333 being stacked as three layers and are conformed with the third lens 333 profile. The reflective linear polarizer 301, the wave plate 32, the beam splitter 34 and the circular polarizer 304 are disposed in order along in a direction from the light source 2 to the optical element assembly 4 according FIG. 6B.

In at least one embodiment of the present disclosure, two sets of pancake lens assembly 3 (figure not shown) includes a first lens 331, two substrates 35, a second lens 332, a reflective linear polarizer 301, a wave plate 32, a beam splitter 34, a third lens 333, a circular polarizer 304, and a fourth lens 334. The folded light path may be, but not limited to, between the second lens 332 and the third lens 333 via the two sets of pancake lens assembly 3 based on the linear polarization of the light ray. Specifically, the reflective linear polarizer 301 and the wave plate 32 are formed, coated or disposed on the surface of the second lens 332 being stacked as two layers and are conformed with the second lens 332 profile; the beam splitter 34 is formed, coated or disposed on the surface of the third lens 333 and is conformed with the third lens 333 profile; and the circular polarizer 304 is formed, coated or disposed on the surface of the substrate 35 at the third lens 333 side. It should be noted that the quantity and connection of each of the parts are exemplary and can be increased, decreased, or altered according to actual needs. Therefore, the two sets of the pancake lens assembly 3 may be without the substrate 35; and the position of the wave plate 32 may be changed (figure not shown), for example, the wave plate 32 and the beam splitter 34 are formed, coated or disposed on the surface of the third lens 333 being stacked as two layers and conformed with the third lens 333 profile. The reflective linear polarizer 301, the wave plate 32, the beam splitter 34 and the circular polarizer 304 are disposed in order along in a direction from the light source 2 to the optical element assembly 4 according to at least one embodiment of the present disclosure.

In at least one embodiment of the present disclosure, two sets of pancake lens assembly 3 (figure not shown) includes a first lens 331, two substrates 35, a second lens 332, a reflective linear polarizer 301, a wave plate 32, a third lens 333, a beam splitter 34, a circular polarizer 304, and a fourth lens 334. The folded light path may be, but not limited to, between the second lens 332 and the third lens 333 via the two sets of pancake lens assembly 3 based on the linear polarization of the light ray. Specifically, the reflective linear polarizer 301 and the wave plate 32 are formed, coated or disposed on the surface of the second lens 332 being stacked as two layers and are conformed with the second lens 332 profile; and the beam splitter 34 and the circular polarizer 304 are formed, coated or disposed on the surface of the substrate 35 at the third lens 333 side. It should be noted that the quantity and connection of each of the parts are exemplary and can be increased, decreased, or altered according to actual needs. Therefore, the two sets of the pancake lens assembly 3 may be without the substrate 35; and the position of the wave plate 32 may be changed (figure not shown), for example, the wave plate 32 is formed, coated or disposed on the surface of the third lens 333 and is conformed with the third lens 333 profile; or the wave plate 32, the beam splitter 34, and the circular polarizer 304 are formed, coated or disposed on the surface of the substrate 35 being stacked as three layers at the third lens 333 side. The reflective linear polarizer 301, the wave plate 32, the beam splitter 34 and the circular polarizer 304 are disposed in order along in a direction from the light source 2 to the optical element assembly 4 according to at least one embodiment of the present disclosure.

In at least one embodiment of the present disclosure, two sets of pancake lens assembly 3 (figure not shown) includes a first lens 331, two substrates 35, a reflective linear polarizer 301, a second lens 332, a wave plate 32, a reflective circular polarizer 302, a third lens 333 and a fourth lens 334. The folded light path may be, but not limited to, between the second lens 332 and the third lens 333 via the two sets of pancake lens assembly 3 based on the linear polarization of the light ray. Specifically, the reflective linear polarizer 301 is formed, coated or disposed on the surface of the substrate 35 at the second lens 332 side; the wave plate 32 is formed, coated or disposed on the surface of the second lens 332 and is conformed with the second lens 332 profile; and the reflective circular polarizer 302 is formed, coated or disposed on the surface of the substrate 35 at the third lens 333. It should be noted that the quantity and connection of each of the parts are exemplary and can be increased, decreased, or altered according to actual needs. Therefore, the position of the wave plate 32 may be changed (figure not shown), for example, the wave plate 32 is formed, coated or disposed on the surface of the third lens 333 and is conformed with the third lens 333 profile; or the wave plate 32 is formed, coated or disposed on the surface of the substrate 35 at the third lens 333 side. The reflective linear polarizer 301, the wave plate 32, and the reflective circular polarizer 302 are disposed in order along in a direction from the light source 2 to the optical element assembly 4 according to at least one embodiment of the present disclosure.

In at least one embodiment of the present disclosure, two sets of pancake lens assembly 3 (figure not shown) includes a first lens 331, two substrates 35, a reflective linear polarizer 301, a second lens 332, a wave plate 32, a beam splitter 34, a circular polarizer 304, a third lens 333 and a fourth lens 334. The folded light path may be, but not limited to, between the second lens 332 and the third lens 333 via the two sets of pancake lens assembly 3 based on the linear polarization of the light ray. Specifically, the reflective linear polarizer 301 is formed, coated or disposed on the surface of the substrate 35 at the second lens 332 side; the wave plate 32 is formed, coated or disposed on the surface of the second lens 332 and conformed with the second lens 332 profile; and the arrangement of the beam splitter 34 and the circular polarizer 304 is described as follow: (1) the beam splitter 34 and the circular polarizer 304 are formed, coated or disposed on the surface of the third lens 333 being stacked as two layers and is conformed with the third lens 333 profile, (2) the beam splitter 34 is formed, coated or disposed on the surface of the third lens 333 and conformed with the third lens 333 profile and the circular polarizer 304 is formed, coated or disposed on the surface of the substrate 35 at the third lens 333 side, or (3) the beam splitter 34 and the circular polarizer 304 are formed, coated or disposed on the surface of the substrate 35 at the third lens 333 side. It should be noted that the quantity and connection of each of the parts are exemplary and can be increased, decreased, or altered according to actual needs. Therefore, the position of the wave plate 32 may be changed (figure not shown), for example, the wave plate 32 is formed, coated or disposed on the surface of the third lens 333 and conformed with the third lens 333 profile; or the wave plate 32 is formed, coated or disposed on the surface of the substrate 35 at the third lens 333 side. The reflective linear polarizer 301, the wave plate 32, the beam splitter 34 and the circular polarizer 304 are disposed in order along in a direction from the light source 2 to the optical element assembly 4 according to at least one embodiment of the present disclosure.

In at least one embodiment of the present disclosure, two sets of pancake lens assembly 3 (figure not shown) includes a first lens 331, two substrates 35, a reflective linear polarizer 301, a wave plate 32, a second lens 332, a reflective circular polarizer 302, a third lens 333 and a fourth lens 334. The folded light path may be, but not limited to, between the second lens 332 and the third lens 333 via the two sets of pancake lens assembly 3 based on the linear polarization of the light ray. Specifically, the reflective linear polarizer 301 and the wave plate 32 are formed, coated or disposed on the surface of the substrate 35 being stacked as two layers at the second lens 332 side; and the reflective circular polarizer 302 is formed, coated or disposed on the surface of the third lens 333 and conformed with the third lens 333 profile. It should be noted that the quantity and connection of each of the parts are exemplary and can be increased, decreased, or altered according to actual needs. The reflective linear polarizer 301, the wave plate 32, and the reflective circular polarizer 302 are disposed in order along in a direction from the light source 2 to the optical element assembly 4 according to at least one embodiment of the present disclosure.

In at least one embodiment of the present disclosure, two sets of pancake lens assembly 3 (figure not shown) includes a first lens 331, two substrates 35, a reflective linear polarizer 301, a wave plate 32, a second lens 332, a beam splitter 34, a circular polarizer 304, a third lens 333 and a fourth lens 334. The folded light path may be, but not limited to, between the second lens 332 and the third lens 333 via the two sets of pancake lens assembly 3 based on the linear polarization of the light ray. Specifically, the reflective linear polarizer 301 and the wave plate 32 are formed, coated or disposed on the surface of the substrate 35 at the second lens 332 side; and the arrangement of the beam splitter 34 and the circular polarizer 304 is described as follow: (1) the beam splitter 34 and the circular polarizer 304 are formed, coated or disposed on the surface of the third lens 333 being stacked as two layers and conformed with the third lens 333 profile, (2) the beam splitter 34 is formed, coated or disposed on the surface of the third lens 333 and conformed with the third lens 333 profile and the circular polarizer 304 is formed, coated or disposed on the surface of the substrate 35 at the third lens 333 side, or (3) the beam splitter 34 and the circular polarizer 304 are formed, coated or disposed on the surface of the substrate 35 at the third lens 333 side. It should be noted that the quantity and connection of each of the parts are exemplary and can be increased, decreased, or altered according to actual needs. The arrangement of each of the parts is positioned, but not limited to, in an order of the reflective linear polarizer 301, the wave plate 32, the beam splitter 34 and the circular polarizer 304 are disposed in order along in a direction from the light source 2 to the optical element assembly 4 according to at least one embodiment of the present disclosure.

In at least one embodiment of the present disclosure, two sets of pancake lens assembly 3 (figure not shown) includes a first lens 331, two substrates 35, a second lens 332, a beam splitter 34, a wave plate 32, a reflective linear polarizer 301, a third lens 333, and a fourth lens 334. The folded light path may be, but not limited to, between the second lens 332 and the third lens 333 via the two sets of pancake lens assembly 3 based on the circular polarization of the light ray. Specifically, the reflective linear polarizer 301 is formed, coated or disposed on the surface of the third lens 333 and conformed with the third lens 333 profile; the beam splitter 34 is formed, coated or disposed on the surface of the second lens 332 side; and the wave plate 32 is formed, coated or disposed on the surface of the third lens 333 (that is, the reflective linear polarizer 301 and the wave plate 32 may be stacked as two layers on the surface of the third lens 333) or the second lens 332 (that is, the beam splitter 34 and the wave plate 32 may be stacked as two layers on the surface of the second lens 332). It should be noted that the quantity and connection of each of the parts are exemplary and can be increased, decreased, or altered according to actual needs, for example, the two sets of the pancake lens assembly 3 may be without the substrate 35. The beam splitter 34, the wave plate 32, and the reflective linear polarizer 301 are disposed in order along in a direction from the light source 2 to the optical element assembly 4 according to at least one embodiment of the present disclosure.

In at least one embodiment of the present disclosure, two sets of pancake lens assembly 3 (figure not shown) includes a first lens 331, two substrates 35, a beam splitter 34, a second lens 332, a wave plate 32, a reflective linear polarizer 301, a third lens 333, and a fourth lens 334. The folded light path may be, but not limited to, between the second lens 332 and the third lens 333 via the two sets of pancake lens assembly 3 based on the circular polarization of the light ray. Specifically, the reflective linear polarizer 301 is formed, coated or disposed on the surface of the third lens 333 and conformed with the third lens 333 profile; the beam splitter 34 is formed, coated or disposed on the surface of the substrate 35 at the second lens 332 side; and the wave plate 32 may be formed, coated or disposed on (1) the surface of the substrate 35 at the second lens 332 side (that is, the beam splitter 34 and the wave plate 32 may be stacked as two layers on the surface of the substrate 35), (2) the surface of the second lens 332, or (3) the third lens 333 (that is, the wave plate 32 and the reflective linear polarizer 301 may be stacked as two layers on the surface of the third lens 333). It should be noted that the quantity and connection of each of the parts are exemplary and can be increased, decreased, or altered according to actual needs. The beam splitter 34, the wave plate 32, and the reflective linear polarizer 301 are disposed in order along in a direction from the light source 2 to the optical element assembly 4 according to at least one embodiment of the present disclosure.

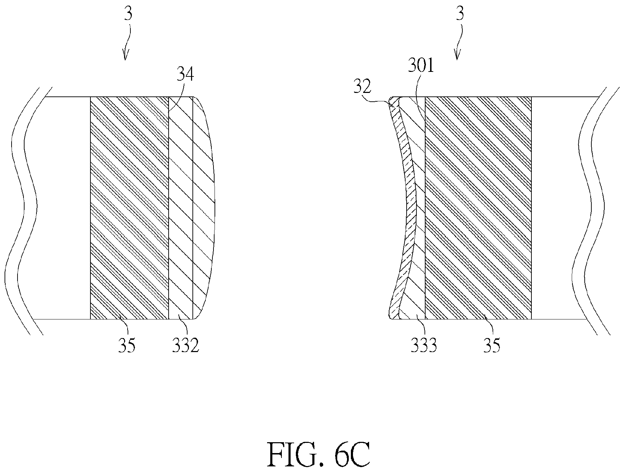

FIG. 6C shows two sets of pancake lens assembly 3 according to at least one embodiment of the present disclosure, including a first lens 331 (figure not shown), two substrates 35, a beam splitter 34, a second lens 332, a wave plate 32, a third lens 333, a reflective linear polarizer 301, and a fourth lens 334 (figure not shown). As shown in FIG. 6C, the folded light path may be, but not limited to, between the second lens 332 and the third lens 333 via the two sets of pancake lens assembly 3 based on the circular polarization of the light ray. Specifically, the reflective linear polarizer 301 is formed, coated or disposed on the surface of the substrate 35 at the third lens 333 side; and the arrangement of the beam splitter 34 and the wave plate 32 is described as follow: (A) the beam splitter 34 is formed, coated or disposed on the surface of the second lens 332 and the wave plate 32 is formed, coated or disposed on the surface of the third lens 333 or the second lens 332 (that is, the beam splitter 34 and the wave plate 32 may be stacked as two layers on the surface of the second lens 332), or (B) the beam splitter 34 is formed, coated or disposed on the surface of the substrate 35 at the second lens 332 side and the wave plate 32 may be formed, coated or disposed on (1) the surface of the substrate 35 at the second lens 332 side (that is, the beam splitter 34 and the wave plate 32 may be stacked as two layers on the surface of the substrate 35), (2) the surface of the second lens 332, or (3) the third lens 333. It should be noted that the quantity and connection of each of the parts are exemplary and can be increased, decreased, or altered according to actual needs. The beam splitter 34, the wave plate 32, and the reflective linear polarizer 301 are disposed in order along in a direction from the light source 2 to the optical element assembly 4 according to FIG. 6C.

Those skilled in the art will readily observe that numerous modifications and alterations of the present disclosure may be made while retaining the teachings of the invention described herein. Accordingly, the embodiments described are intended to cover the modifications and alterations within the scope of the present disclosure, rather than to limit the present disclosure. The scope of the claims therefore should be accorded the broadest interpretation so as to encompass all such modifications and alterations.

## Claims

1. A projector (1), comprising:
a light source (2) for emitting incident light rays;
a pancake lens assembly (3) configured to fold light path of the incident light rays, comprising:
a polarizer;
a wave plate (32);
a lens connected to the polarizer or the wave plate (32); and
an optical element assembly (4) for forming a pattern by the incident light rays emitted from the pancake lens assembly (3),
wherein the pancake lens assembly (3) is disposed between the light source (2) and the optical element assembly (4).

2. The projector (1) of claim 1, wherein the pancake lens assembly (3) further comprises a substrate (35).

3. The projector (1) of claim 1, wherein the light source (2) is a laser.

4. The projector (1) of claim 1, wherein the incident light rays are linear polarization light rays, circular polarization light rays, or non-polarized light rays.

5. The projector (1) of claim 4, further comprises the linear polarizer or the circular polarizer (304), wherein the linear polarizer or the circular polarizer (304) is disposed between the light source (2) and the pancake lens assembly (3), provided that the incident light rays are the non-polarized light rays.

6. The projector (1) of claim 4, wherein the pancake lens assembly (3) further comprises a beam splitter (34).

7. The projector (1) of claim 6, wherein the beam splitter (34) is disposed after the wave plate (32) in a direction from the light source (2) to the optical element assembly (4), provided that the incident light rays are the linear polarization light rays.

8. The projector (1) of claim 6, wherein the beam splitter (34) is disposed before the wave plate (32) in a direction from the light source (2) to the optical element assembly (4), provided that the incident light rays are the circular polarization light rays.

9. The projector (1) of claim 6, wherein the polarizer is selected from the group consisting of a reflective linear polarizer (301), a reflective circular polarizer (302), a circular polarizer (304), a linear polarizer, and any combination thereof.

10. The projector (1) of claim 9, wherein the reflective linear polarizer (301), the wave plate (32), and the reflective circular polarizer (302) are disposed in order along a direction from the light source (2) to the optical element assembly (4), provided that the incident light rays are the linear polarization light rays.

11. The projector (1) of claim 9, wherein the reflective linear polarizer (301), the wave plate (32), the beam splitter (34), and the circular polarizer (304) are disposed in order along a direction from the light source (2) to the optical element assembly (4), provided that the incident light rays are the linear polarization light rays.

12. The projector (1) of claim 9, wherein the beam splitter (34), the wave plate (32), and the reflective linear polarizer (301) are disposed in order along a direction from the light source (2) to the optical element assembly (4), provided that the incident light rays are the circular polarization light rays.

13. The projector (1) of claim 1, wherein the wave plate (32) is a quarter-wave plate.

14. The projector (1) of claim 1, wherein the pancake lens assembly (3) comprises a first lens (331).

15. The projector (1) of claim 14, wherein the wave plate (32) is disposed close to the first lens (331) in a direction from the light source (2) to the optical element assembly (4).

16. The projector (1) of claim 14, wherein the pancake lens assembly (3) further comprises a second lens (332).

17. The projector (1) of claim 16, wherein the wave plate (32) is disposed before the first lens (331) in a direction from the light source (2) to the optical element assembly (4), between the first lens (331) and the second lens (332), or after the second lens (332) in a direction from the light source (2) to the optical element assembly (4).

18. The projector (1) of claim 16, wherein the pancake lens assembly (3) further comprises a third lens (333) and a fourth lens (334).

19. The projector (1) of claim 18, wherein the wave plate (32) is disposed before the third lens (333) in a direction from the light source (2) to the optical element assembly (4), between the third lens (333) and the fourth lens (334), or after the fourth lens (334) in a direction from the light source (2) to the optical element assembly (4).

20. The projector (1) of claim 18, further comprising a substrate (35) disposed between the first lens (331) and the second lens (332) and/or between the third lens (333) and the fourth lens (334).
